# EUROPÄISCHE PATENTSCHRIFT

(11) **EP 1 388 370 B1**
(45) Veröffentlichungstag und Bekanntmachung des Hinweises auf die Patenterteilung: **18.04.2007**
(21) Anmeldenummer: 03013760.8
(22) Anmeldetag: 18.06.2003
(51) Int. Cl.: B03D 1/02, C02F 1/24, D21F 1/70, B03D 1/14

(54) **Verfahren zur Entfernung von Störstoffen aus einer wässsrigen Papierfasersuspension**
Method for removing impurities from an acqueous paper pulp suspension
Procédé d' élimination des impuretés d'une suspension de pâte à papier aqueuse

(30) Priorität: 07.08.2002 DE 10236123
(43) Veröffentlichungstag der Anmeldung: 11.02.2004
(73) Patentinhaber: Voith Patent GmbH, 89522 Heidenheim (DE)
(72) Erfinder: Kemper, Martin, 88250 Weingarten (DE)

(56) Entgegenhaltungen:
- EP-A- 1 262 593
- DE-A- 4 429 277
- PT-A- 101 568
- US-A- 5 062 964
- US-A- 5 330 655

## Beschreibung

Die Erfindung betrifft ein Verfahren zur Entfernung von Störstoffen aus einer wässrigen Papierfasersuspension gemäß dem Oberbegriff des Anspruchs 1.

Durch Flotation wird ein die auszuscheidenden Stoffe enthaltender Schaum oder Schwimmschlamm gebildet. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so dass sie sich ausflotieren lassen. Der hier beschriebene Flotationsvorgang nutzt die Unterschiede zwischen Papierfaserstoff und unerwünschten Störstoffteilchen in der Art, dass der Faserstoff aufgrund seines eher hydrophilen Charakters in der Fasersuspension verbleibt, während die angesprochenen Störstoffteilchen hydrophob sind und deshalb zusammen mit den Luftblasen in den Schaum gelangen. Weil dabei nicht alle Feststoffe ausflotiert, sondern Fasern von Verunreinigungen getrennt werden, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet. Solche Stoffe sind insbesondere Kleber, sogenannte Stickies, feine Kunststoffpartikel und eventuell auch Harze.

Wie z.B. in der US 5,062,964 A beschrieben, kann die zur Flotation eingesetzte Luftmenge eingestellt werden, um die Menge des erzeugten Schaumes zu regeln. Dadurch wird insbesondere eine übermäßige Schaummenge verhindert. Es wird auch erwähnt, dass die Luftmenge nicht zu klein sein darf, um Qualitätsverluste zu vermeiden.

Eine Flotationsanlage der hier beschriebenen Art besteht aus einer Mehrzahl von Flotationszonen, die jeweils belüftet werden. Das heißt, dass zumindest in einem Teil der Flotationszonen eine erneute Zugabe von Luft oder Gas in die dieser Zone zugeführte Suspension erfolgt. Dabei ist es z.B. aus der EP 1 124 001 A2 bekannt, die Menge der Luft für verschiedene Flotationszonen zu variieren.

Es ist ferner bekannt, bei Flotationsverfahren laufende Messungen von wichtigen Betriebsgrößen und Qualitätswerten vorzunehmen und diese regeltechnisch auszuwerten. Hierzu führt die DE 44 29 277 A1 Beispiele an, bei denen mit Hilfe der Fuzzy Logig Mengen/Füllstände und Produktqualität geregelt werden.

Da der Flotationsschaum, der bei einer einzigen Flotationsstufe gebildet wird, in den meisten Fällen noch einen beträchtlichen Anteil von Papierfasern enthält, wird oft auch mit zwei Flotationsstufen gearbeitet, wobei der Überlauf, also der Flotationsschaum, der ersten Stufe als Einlauf in die zweite Stufe geführt wird. Üblicherweise spricht man dann von einer ersten und zweiten Flotationsstufe oder auch von Primär- und Sekundärflotation. Es sind auch Flotationsanlagen denkbar, die mehr als zwei Stufen haben. Der Durchlauf einer späteren Flotationsstufe kann dem Zulauf der vorigen Flotationsstufe wieder zugegeben werden. Anlagen, die nach einem solchen Verfahren arbeiten, haben sich bewährt, da sie bei geringen Stoffverlusten zu einer guten Qualität des so gebildeten Gutstoffes führen. Da sich jedoch die Rohstoffe, insbesondere wenn sie aus Altpapier bestehen, in ihrer Zusammensetzung und Qualität ständig ändern, ist es nicht immer einfach, solche Anlagen optimal zu fahren. Eine Optimierung kann z.B. dahin gehen, dass bei kurzzeitig leichter erreichbaren Qualitätswerten (z.B. höherer Weißgrad) nicht der Qualitätssollwert überschritten, sondern stattdessen der Faserverlust abgesenkt wird.

Ein weiteres Problem liegt darin, dass wegen der großen Volumina der Flotationsvorrichtungen auch die Regel-Totzeiten oft sehr hoch sind.

Der Erfindung liegt die Aufgabe zu Grunde, das Verfahren so zu gestalten, dass eine gute und schnell wirkende Regelung, z.B. auf konstante Qualität des erzeugten Gutstoffs ermöglicht wird. Dabei sollen Stoffverluste auf das geringstmögliche Maß beschränkt werden.

Diese Aufgabe wird durch die im Kennzeichen des Anspruchs 1 genannten Merkmale bereits vollständig gelöst.

Mit Hilfe des erfindungsgemäßen Verfahrens werden Möglichkeiten geschaffen, durch automatische Regelprozesse die Wirkung einer Flotationsanlage weiter zu verbessern. Dabei wird die Wirkung der letzten Flotationszone, eventuell zusammen mit einer oder mehreren direkt stromaufwärts liegenden, durch Ändern der Belüftung so gesteuert, dass sich der abfließende Gutstoff sofort ändert. So kann relativ schnell auf kurzfristige Qualitätsschwankungen reagiert werden. Mit besonderem Vorteil lässt sich dieses Verfahren kombinieren mit Regelungen, die sich für das Ausgleichen von langsamen Qualitätsschwankungen eignen. Im Allgemeinen kann man sagen, dass eine langsam reagierende Regelung leichter im wirtschaftlichen Optimum einer Gesamtanlage operieren kann. Andererseits ist es zur Qualitätssicherung unerlässlich, auch bei kurzfristigen Schwankungen schnell zu reagieren, selbst wenn dadurch die Ökonomie des Gesamtprozesses etwas leiden sollte.

Mit Vorteil kann das erfindungsgemäße Verfahren an Flotationsanlagen durchgeführt werden, die mit einer Mehrzahl von gleichen oder ähnlichen in Reihe geschalteten Flotationszellen versehen sind. Dabei wird der Durchlauf einer stromaufwärtigen Zelle in den Zulauf einer stromabwärtigen Zelle derselben Flotationsstufe gefördert, wobei sich mit einfachen Mitteln diese Suspensionsströme neu belüften lassen.

Die Erfindung und ihre Vorteile werden erläutert an Hand von Zeichnungen. Dabei zeigen:
- Fig. 1: ein Verfahrensschema mit zwei Flotationsstufen;
- Fig. 2: eine Flotationszelle zur Durchführung des Verfahrens;
- Fig. 3: grob schematisch: Nebeneinander liegende Flotationszellen;
- Fig. 4: ein Verfahrensschema mit einer einzigen Flotationsstufe;
- Fig. 5: ein Verfahrensschema mit vorgeschalteter Sekundärstufe.

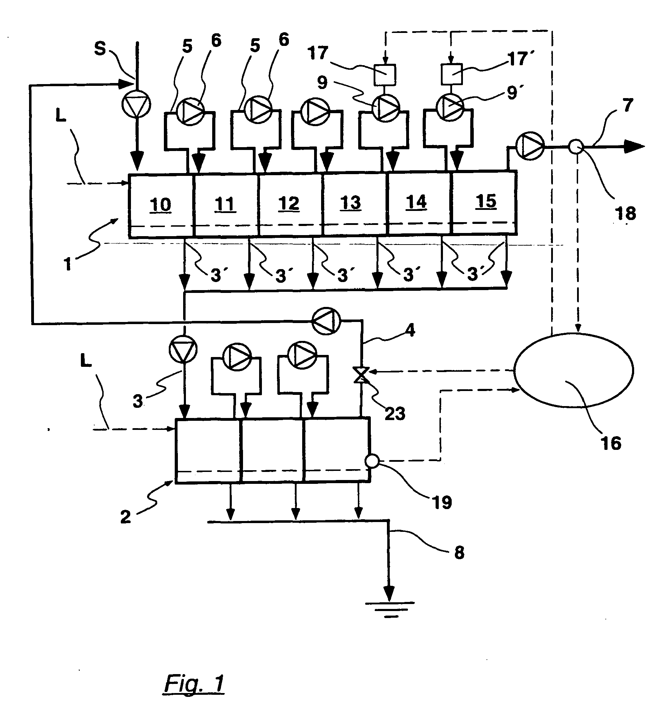

Gemäß Fig. 1 wird die Papierfaserstoffsuspension S zunächst einer ersten Flotationsstufe 1 zugeführt. Der apparative Aufbau einer solchen Flotationsstufe ist an sich bekannt. Sie kann mit Vorteil mehrere Flotationszellen enthalten, welche von der Suspension nacheinander durchströmt werden. Bei dem hier gezeigten Beispiel sind sechs Flotationszellen 10 bis 15 der ersten Flotationsstufe 1 gezeichnet. Der Durchlauf 5 einer Flotationszelle wird abgezogen und via Pumpe 6 der nächsten Flotationszelle wieder zugeführt. Dabei findet eine erneute Belüftung statt. Die Überläufe 3' der einzelnen Flotationszellen werden als Flotationsschaum aus dieser ersten Flotationsstufe 1 entfernt, eventuell entlüftet (nicht dargestellt) und zusammen mit den Überläufen der anderen Zellen dieser Flotationsstufe der folgenden und hier letzten Flotationsstufe 2 zugeführt. Auch aus dieser wird ein Flotationsschaum (Überlauf 8) abgezogen, wobei es typisch für solche Kaskadenschaltungen ist, dass der Flotationsschaum der späteren Stufen wesentlich mehr Störstoffe und wesentlich weniger Fasern enthält als der Flotationsschaum der voranstehenden Stufen. Der in der zweiten Flotationsstufe 2 gebildete Durchlauf 4 wird in die erste Flotationsstufe 1 zurückgeführt und erneut flotiert, da er in vielen Fällen nicht die Qualität des Durchlaufes 7 aus der ersten Flotationsstufe 1 erreicht. Die letzten beiden Flotationszellen 14 und 15 der ersten Flotationsstufe 1 werden durch Pumpen 9 und 9' versorgt, die mit regelbaren Antrieben 17 und 17' versehen sind. Es kann auch genügen, diese Maßnahme nur bei der letzten Flotationszelle 15 vorzusehen.

Mit Vorteil wird die ganze Flotationsanlage durch einen Regler 16 gesteuert. Dieser Regler 16 verarbeitet unter Anderem ein Qualitätssignal aus dem Qualitätssensor 18 und steuert die Antriebe 17 und 17'.

Außerdem wird mittels Niveautransmitter 19 bzw. 19' und Stellventil 23 bzw. 23' in der Durchlaufleitung einer Flotationszelle die Höhe des Suspensionsniveaus in der Flotationszelle auf einem vorgegebenen Wert gehalten. Das regelt die Schaummenge am - unverändert gelassenen - Überlaufwehr. Auf die zweite Flotationsstufe 2 angewandt, lässt sich durch Änderung des Niveaus die Qualität des Gutstoffes 7 beeinflussen, weil dadurch, bezogen auf den Durchsatz dieser Stufe, eine größere bzw. kleinere Schaummenge und damit auch Störstoffmenge entfernt wird. Allerdings ändert das auch wiederum die Konzentrationen in den Flotationsstufen, so dass eine beträchtliche Zeit vergeht, bis sich ein neuer Gleichgewichtszustand eingestellt hat. Diese Regelung ist besonders gut geeignet, um langsame Qualitätsschwankungen auszugleichen.

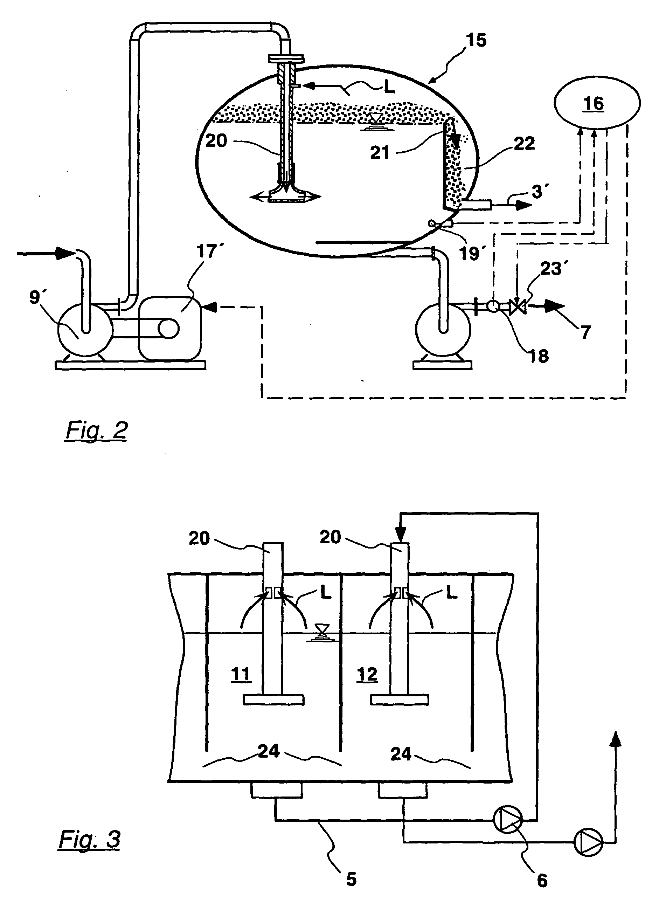

Die in Fig. 2 als Schnitt einer Seitenansicht schematisch dargestellte Flotationszelle 15 zeigt die Abfuhr des Schaumes, welcher über ein Wehr 21 in die Schaumrinne 22 abfließt. Oft sind mehrere etwa gleiche Zellen zu einer Flotationsstufe zusammengestellt und hydrostatisch miteinander verbunden, so dass sich in ihnen ein gleiches Flüssigkeitsniveau einstellt. Zufuhr und Belüftung des zugeführten Stoffstromes erfolgen jeweils durch ein Belüftungsrohr 20. Dieses saugt nach dem Injektorprinzip die Luft L aus dem Inneren der Flotationszelle ab.

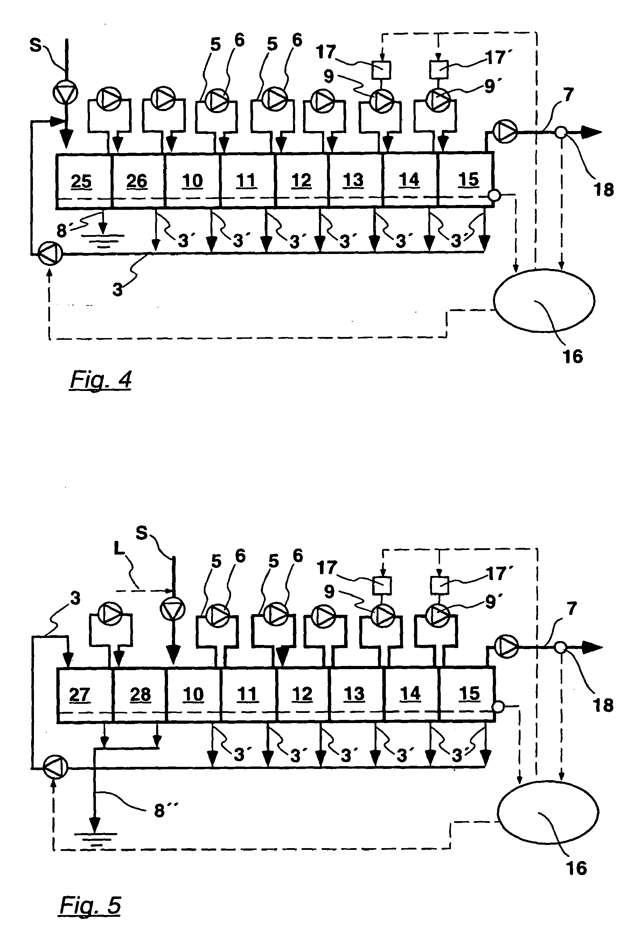

Der gereinigte Durchlauf einer Zelle wird dicht über dem Boden abgepumpt. Da es sich bei der hier gezeigten Zelle um die letzte der ersten Flotationsstufe 1 handelt, stellt der daraus abgepumpte Gutstoff 7 im Allgemeinen den Gutstoff der gesamten Flotationsanlage dar, muss also die daran gestellten Qualitätsanforderungen erfüllen. Ein Qualitätssensor 18 meldet die entsprechenden Werte an den Regler 16. Das Niveau in dieser Flotationszelle wird durch den Niveautransmitter 19 ermittelt und ebenfalls an den Regler 16 weitergeleitet. Somit kann das Niveau in allen zu einer Stufe gehörenden Zellen konstant gehalten werden, z.B. indem auf Anweisung des Reglers 16 das Stellventil 23 betätigt wird. Es ist auch möglich, das Niveau in der Schaumrinne 22 zu messen, um den Schaumabfluss zu regeln. Die ebenfalls sichtbare Pumpe 9' dient dazu, aus der nicht gezeigten, benachbarten Zelle, die stromaufwärts zu dieser Zelle geschaltet ist, den Gutstoff abzuziehen und in das schon erwähnte Lüftungsrohr 20 der Zelle 15 einzuführen. Dabei ist hier die Möglichkeit vorgesehen, durch Veränderung der Drehzahl des Antriebes 17 den Pumpendurchsatz zu beeinflussen. Meldet z.B. der Qualitätssensor 18 eine Sollwertabweichung, kann durch entsprechende Drehzahlvariation des Antriebs 17' ein geänderter Volumenstrom in die Flotationszelle 15 gelangen. Infolge der physikalischen Verhältnisse im Mischrohr 20 führt das zu einer höheren Luftmenge bei ansteigendem und zu einer geringeren Luftmenge bei sinkendem Volumenstrom. Bei größerer Luftmenge steigt spontan auch die durch Schaum abgeführte Stoffmenge. Die Menge des aus der letzten Flotationszelle 15 abgezogenen Gutstoffes 7 kann dabei gleich bleiben, was noch im Zusammenhang mit Fig. 3 erläutert wird.

In der Kombination dieses schnellwirkenden Regelvorgangs an der ersten Flotationsstufe 1 mit dem Langsamwirkenden an der letzten Flotationsstufe 2 liegt eine besonders vorteilhafte Ausgestaltung des Verfahrens. Qualitätsabweichungen können zunächst kurzfristig ausgeglichen werden, was für die Produktion des Papiers aus dem Papierfaserstoff vorrangig ist. In einem überlagernden langsameren Regelvorgang werden Verluste minimiert, ohne dass die Qualität leidet.

In Fig. 3 sind sehr schematisch die nebeneinander liegenden Flotationszellen dargestellt. Diese Figur zeigt eine sehr einfache Möglichkeit, solche horizontal angeordneten Zellen durch Öffnungen 24 in den Zellenwänden hydrostatisch miteinander zu verbinden. Unterschiede der durch die Pumpen zu- und abgeführten Volumenströme können so ausgeglichen werden.

Wie die Fig. 4 an einem weiteren Beispiel zeigt, ist es auch möglich, die erfindungsgemäßen Maßnahmen an einer Flotationsanlage durchzuführen, welche lediglich eine einzige Flotationsstufe aufweist. Dabei wird der Überlauf 8' der ersten Flotationszone, die hier durch die Flotationszelle 25 gebildet wird, als Rejekt abgezogen und verworfen. Es ist auch denkbar, die Überläufe mehrerer am stromaufwärtigen Teil dieser Flotationsanlage liegenden Überläufe als Rejekt zu verwerfen. In Fig. 5 dagegen befinden sich, strömungsmäßig betrachtet, vor dem Zulauf der Papierfaserstoffsuspension S weitere Flotationszellen 27, 28, die funktionsmäßig als Sekundärstufe zu betrachten sind. Ihnen wird der Überlauf 3 zugeführt, der sich zusammensetzt aus den einzelnen Überläufen 3'. Der Überlauf 8'' dieser beiden Flotationszellen 27, 28 wird als Rejekt behandelt.

## Patentansprüche

1. Verfahren zur Entfernung von Störstoffen aus einer wässrigen Papierfaserstoffsuspension (S) mit Hilfe einer Flotationsanlage, die mehrere Flotationszonen umfasst, die jeweils belüftet werden,
**dadurch gekennzeichnet,**
**dass** die Menge der Luft, die in der letzten Flotationszone oder in den letzten Flotationszonen zugegeben wird, so verändert wird, dass zur Erfüllung der Qualitätsanforderungen an den aus dieser Flotationsanlage abgeführten Gutstoff (7), insbesondere zur Erreichung eines vorgegebenen Qualitätssollwertes, eine Vermehrung oder-Verminderung-des in diesen Flotationszonen abgezogenen Überlaufes (3') hervorgerufen wird.

2. Verfahren nach Anspruch 1,
**dadurch gekennzeichnet,**
**dass** mit dem Durchlauf der letzten Flotationszone der Gutstoff (7) der Flotationsanlage gebildet wird.

3. Verfahren nach Anspruch 1 oder 2,
**dadurch gekennzeichnet,**
**dass** der Qualitätssollwert des Gutstoffes (7) ein Weißgrad ist.

4. Verfahren nach Anspruch 1 oder 2,
**dadurch gekennzeichnet,**
**dass** der Qualitätssollwert des Gutstoffes (7) die Sauberkeit ist.

5. Verfahren nach Anspruch 1 oder 2,
**dadurch gekennzeichnet,**
**dass** der Qualitätssollwert des Gutstoffes (7) der Aschegehalt ist.

6. Verfahren nach einem der Ansprüche 1 bis 5,
**dadurch gekennzeichnet,**
**dass** die Qualität des Gutstoffs (7) der letzten Flotationszone durch einen Qualitätssensor (18) online gemessen wird und dass dieses Messsignal in einem Regler (16), der die genannten Ansteuerungen vornimmt, verarbeitet wird.

7. Verfahren nach einem der voranstehenden Ansprüche,
**dadurch gekennzeichnet,**
**dass** die Flotationsanlage mindestens zwei Flotationsstufen (1, 2) enthält,
die so geschaltet sind, dass der Überlauf (3) der vorigen Flotationsstufe in den Zulauf zur nächsten Flotationsstufe geführt wird,
wobei zumindest die erste Flotationsstufe (1) aus mehreren Flotationszonen besteht, welche jeweils belüftet werden,
wobei die Menge des Überlaufes (8, 8") der zweiten Flotationsstufe (2) einstellbar ist und
wobei zumindest in einer nicht zur letzten Flotationsstufe (2) zählenden Flotationsstufe (1) die Menge der Luft, die in der letzten Flotationszone oder in den letzten Flotationszonen dieser Flotationsstufe (1) zugegeben wird, so verändert wird, dass zur Erfüllung der Qualitätsanforderungen an den aus dieser Flotationsstufe (1) abgeführten Gutstoff (7) eine Vermehrung oder Verminderung des in diesen Flotationszonen abgezogenen Überlaufes (3') hervorgerufen wird.

8. Verfahren nach Anspruch 7,
**dadurch gekennzeichnet,**
**dass** die Menge des Überlaufes (8, 8") der letzten Flotationsstufe (2) so eingestellt wird, dass der Gutstoff (7) der ersten Flotationsstufe (1) die Qualitätsanforderungen erfüllt, wobei dieser Regelvorgang wesentlich träger durchgeführt wird als der genannte Regeleingriff an der Luftzufuhr der stromaufwärtigen Flotationsstufe (1).

9. Verfahren nach Anspruch 7 oder 8,
**dadurch gekennzeichnet,**
**dass** die Flotationszonen durch Flotationszellen (10, 11, 12, 13, 14, 15) gebildet werden, aus denen der jeweilige Gutstoff (5) über eine Pumpe (6, 9, 9') abgezogen und nach erneuter Belüftung in die nächste Flotationszelle weitergeführt wird, wobei die Flotationszellen waagerecht nebeneinander angeordnet und hydrostatisch miteinander verbunden sind.

10. Verfahren nach Anspruch 9,
**dadurch gekennzeichnet,**
**dass** die in der letzten Flotationszelle (15) oder in den letzten Flotationszellen (14, 15) zur Flotation zur Verfügung gestellte Luftmenge durch Verstellung der hydraulischen Durchsatzmenge der jeweiligen der Weiterführung dienenden Pumpe (9, 9') geändert wird.

11. Verfahren nach Anspruch 10,
**dadurch gekennzeichnet,**
**dass** der Antrieb (17, 17') der Pumpe (9, 9') drehzahlveränderbar ist.

12. Verfahren nach einem der Ansprüche 7 bis 11,
**dadurch gekennzeichnet,**
**dass** die Qualität des Gutstoffs (7) der ersten Flotationsstufe (1) durch einen Qualitätssensor (18) online gemessen wird und dass dieses Messsignal in einem Regler (16), der die genannten Ansteuerungen vornimmt, verarbeitet wird.

13. Verfahren nach einem der Ansprüche 9 bis 12,
**dadurch gekennzeichnet,**
**dass** das Niveau in den Flotationszellen zur Steuerung der Menge des abgeführten Flotationsschaumes eingestellt wird.

14. Verfahren nach Anspruch 13,
**dadurch gekennzeichnet,**
**dass** ein Niveautransmitter (19, 19') das Flüssigkeitsniveau in der Flotationszelle erfasst und dass durch Volumenstrom-Einstellung des Durchlaufes (4, 7) einer Flotationsstufe (1, 2) die Überlaufmenge (3, 8) dieser Flotationsstufe (1, 2) geregelt wird.

15. Verfahren nach einem der Ansprüche 7 bis 14,
**dadurch gekennzeichnet,**
**dass** der Durchlauf (4) der letzten Flotationsstufe (2) in den Zulauf einer hierzu stromaufwärtigen Flotationsstufe (1) zurückgeführt wird.

## Claims

1. A method of removing impurities from an aqueous paper pulp suspension (S) with the aid of a flotation plant comprising a plurality of flotation zones which are each aerated, **characterised in that** the amount of air supplied to the last flotation zone or the last flotation zones is varied so that, in order to satisfy the quality demands on the accepted stock (7) discharged from this flotation plant, especially to achieve a predetermined desired quality value, an increase or decrease in the overflow (3') drawn off from these flotation zones is effected.

2. A method according to claim 1, **characterised in that** the accepted stock (7) of the flotation plant is formed by the outflow from the last flotation zone.

3. A method according to claim 1 or 2, **characterised in that** the desired quality value of the accepted stock (7) is a degree of whiteness.

4. A method according to claim 1 or 2, **characterised in that** the desired quality value of the accepted stock (7) is cleanliness.

5. A method according to claim 1 or 2, **characterised in that** the desired quality value of the accepted stock (7) is the ash content.

6. A method according to any one of claims 1 to 5, **characterised in that** the quality of the accepted stock (7) from the last flotation zone is measured online by a quality sensor (18) and **in that** this measuring signal is processed in a controller (16) which makes the aforementioned selections.

7. A method according to any one of the preceding claims, **characterised in that** the flotation plant comprises at least two flotation stages (1, 2) which are connected so that the overflow (3) from the preceding flotation stage is fed into the inflow into the next flotation stage, wherein at least the first flotation stage (1) comprises a plurality of flotation zones which are each aerated, wherein the amount of the overflow (8, 8") from the second flotation stage (2) is adjustable and wherein, at least in a flotation stage (1) not being the last flotation stage (2), the amount of air supplied to the last flotation zone or the last flotation zones of this flotation stage (1) is varied so that, in order to satisfy the quality demands on the accepted stock (7) discharged from this flotation stage (1), an increase or decrease in the overflow (3') drawn off from these flotation zones is effected.

8. A method according to claim 7, **characterised in that** the amount of the overflow (8, 8") from the last flotation stage (2) is adjusted so that the accepted stock (7) from the first flotation stage (1) satisfies the quality demands, wherein this control process is carried out substantially more slowly than the aforementioned control intervention in the air supply to the flotation stage (1) arranged upstream.

9. A method according to claim 7 or 8, **characterised in that** the flotation zones are formed by flotation cells (10, 11, 12, 13, 14, 15), from which the respective accepted stock (5) is drawn off by a pump (6, 9, 9') and, after renewed aeration, is fed into the next flotation cell, wherein the flotation cells are arranged horizontally side by side and are hydrostatically connected to one another.

10. A method according to claim 9, **characterised in that** the amount of air available for flotation in the last flotation cell (15) or in the last flotation cells (14, 15) is varied by adjusting the hydraulic throughput of the respective pump (9, 9'), which serves to feed the accepted stock further.

11. A method according to clam 10, **characterised in that** the drive (17, 17') of the pump (9, 9') is speed-variable.

12. A method according to any one of claims 7 to 11, **characterised in that** the quality of the accepted stock (7) from the first flotation stage (1) is measured online by a quality sensor (18) and **in that** this measuring signal is processed in a controller (16) which makes the aforementioned selections.

13. A method according to any one of claims 9 to 12, **characterised in that** the level in the flotation cells is adjusted in order to control the amount of flotation foam discharged.

14. A method according to claim 13, **characterised in that** a level transmitter (19, 19') detects the liquid level in the flotation cell and **in that**, by adjusting the volume flow of the outflow (4, 7) from a flotation stage (1, 2), the overflow amount (3, 8) from this flotation stage (1, 2) is controlled.

15. A method according to any one of claims 7 to 14, **characterised in that** the outflow (4) from the last flotation stage (2) is fed back into the inflow of a flotation stage (1) arranged upstream thereof.

## Revendications

1. Procédé d'élimination d'impuretés d'une suspension aqueuse de matière fibreuse de papier (S) à l'aide d'une installation de flottation qui comprend plusieurs zones de flottation qui sont chacune aérées,
**caractérisé en ce que**
la quantité d'air qui est admise dans la dernière zone de flottation ou dans les dernières zones de flottation est modifiée de manière à provoquer une augmentation ou une réduction de la surverse retirée dans ces zones de flottation (3') pour satisfaire aux exigences qualitatives relatives à la pâte acceptée (7) qui est évacuée de cette installation de flottation, notamment pour obtenir une, valeur de consigne qualitative fixée à l'avance.

2. Procédé selon la revendication 1,
**caractérisé en ce que**
la pâte acceptée (7) de l'installation de flottation est constituée du filtrat de la dernière zone de flottation.

3. Procédé selon la revendication 1 ou 2,
**caractérisé en ce que**
la valeur de consigne qualitative de la pâte acceptée (7) est un degré de blanc.

4. Procédé selon la revendication 1 ou 2,
**caractérisé en ce que**
la valeur de consigne qualitative de la pâte acceptée (7) est la propreté.

5. Procédé selon la revendication 1 ou 2,
**caractérisé en ce que**
la valeur de consigne qualitative de la pâte acceptée (7) est la teneur en cendres.

6. Procédé selon l'une des revendications 1 à 5,
**caractérisé en ce que**
la qualité de la pâte acceptée (7) de la dernière zone de flottation est mesurée en ligne par un capteur de mesure de qualité (18) et **en ce que** ce signal de mesure est traité dans un régulateur (16) qui effectue lesdites commandes.

7. Procédé selon l'une des revendications précédentes,
**caractérisé en ce que**
l'installation de flottation comporte au moins deux étages de flottation (1, 2) qui sont disposes de telle sorte que la surverse (3) de l'étage de flottation précédent soit conduite dans l'arrivée de l'étage de flottation suivant,
le premier étage de flottation (1), au moins, se composant de plusieurs zones de flottation qui sont chacune aérées,
la quantité de surverse (8, 8") du deuxième étage de flottation (2) étant réglable, et
au moins dans un étage de flottation (1) ne faisant pas partie du dernier étage de flottation (2), la quantité d'air qui est admise dans la dernière zone de flottation ou dans les dernières zones de flottation de cet étage de flottation (1) étant modifiée de manière à provoquer une augmentation ou une réduction de la surverse (3') retirée dans ces zones de flottation pour satisfaire aux exigences qualitatives relatives à la pâte acceptée (7) qui est évacuée de cet étage de flottation (1).

8. Procédé selon la revendication 7,
**caractérisé en ce que**
la quantité de surverse (8, 8") du dernier étage de flottation (2) est réglée de telle sorte que la pâte acceptée (7) du premier étage de flottation (1) remplisse les exigences qualitatives, ce processus de réglage étant mis en oeuvre de manière sensiblement plus lente que ladite opération de réglage au niveau de l'amenée d'air de l'étage de flottation amont (1).

9. Procédé selon la revendication 7 ou 9,
**caractérisé en ce que**
les zones de flottation sont formées par des cellules de flottation (10, 11, 12, 13, 14, 15) desquelles la pâte acceptée (5) est chaque fois retirée par l'intermédiaire d'une pompe (6, 9, 9') et est conduite, après un nouvel aérage, dans la cellule de flottation suivante, les cellules de flottation étant disposées horizontalement les unes à côté des autres et étant reliées hydrostatiquement les unes aux autres.

10. Procédé selon la revendication 9,
**caractérisé en ce que**
la quantité d'air mise à disposition pour la flottation dans la dernière cellule de flottation (15) ou dans les dernières cellules de flottation (14, 15) est modifiée en réglant le débit hydraulique de la pompe respective (9, 9') servant à la poursuite du transport.

11. Procédé selon la revendication 10,
**caractérisé en ce que**
l'on peut modifier la vitesse de rotation de l'entraînement (17, 17') de la pompe (9, 9').

12. Procédé selon l'une des revendications 7 à 11,
**caractérisé en ce que**
la qualité de la pâte acceptée (7) du premier étage de flottation (1) est mesurée en ligne par un capteur de mesure de qualité (18) et **en ce que** ce signal de mesure est traité dans un régulateur (16) qui effectue lesdites commandes.

13. Procédé selon l'une des revendications 9 à 12,
**caractérisé en ce que**
le réglage du niveau dans les cellules de flottation sert à commander la quantité d'écume de flottation évacuée.

14. Procédé selon la revendication 13,
**caractérisé en ce que**
un transmetteur de niveau (19, 19') détecte le niveau de liquide dans la cellule de flottation et **en ce que** l'on règle la quantité de surverse (3, 8) d'un étage de flottation (1, 2) en réglant l'écoulement volumique du filtrat (4, 7) de cet étage de flottation (1, 2).

15. Procédé selon l'une des revendications 7 à 14,
**caractérisé en ce que**
le filtrat (4) du dernier étage de flottation (2) est ramené dans l'arrivée d'un étage de flottation (1) situé en amont dudit- dernier étage.
